# EUROPÄISCHE PATENTANMELDUNG

(11) **EP 2 505 056 A1**
(43) Veröffentlichungstag der Anmeldung: **03.10.2012**
(21) Anmeldenummer: 12159928.6
(22) Anmeldetag: 16.03.2012
(51) Int. Cl.: A01K 27/00

(54) **Halte- und Führungsvorrichtung für Tiere**

(30) Priorität: 01.04.2011 DE 202011004773 U
(71) Anmelder: Weles GmbH, 45470 Mühlheim an der Ruhr (DE)
(72) Erfinder: Wehning, Marc, D-45472 Mühlheim an der Ruhr (DE); Lesniak, Stephan, D-45470 Mühlheim an der Ruhr (DE)
(74) Vertreter: Albrecht, Ralf

(57) **Zusammenfassung**

Die Erfindung betrifft eine Halte- und Führungsvorrichtung (1) für Tiere mit mindestens einem Halsgurt (2) aus einem flachen Gurtmaterial, mindestens einem Gurtverschluss (3), mit dem die Halte- und Führungsvorrichtung (1) geöffnet und geschlossen werden kann, und mit mindestens einem Speichermedium (9) zur Speicherung von insbesondere tier- und halterspezifischen Daten, wobei das Speichermedium (9) derart an dem Gurtverschluss (3) angebracht ist, dass es in einer Schließstellung des Gurtverschlusses (3) in letzterem verliersicher und vor äußeren Einflüssen geschützt aufgenommen ist.

## Beschreibung

Die vorliegende Erfindung betrifft eine Halte- und Führungsvorrichtung für Tiere mit mindestens einem Halsgurt aus einem flachen Gurtmaterial, mindestens einem Gurtverschluss, mit dem die Halte- und Führungsvorrichtung geöffnet und geschlossen werden kann, und mit mindestens einem Speichermedium zur Speicherung von insbesondere tier- und halterspezifischen Daten.

Es ist allgemein bekannt, eine verschraubbare Metallkapsel an einem Halsband zur Identifikation von Hunden und Katzen anzubringen, welche meist aus zwei Teilen gebildet ist, in die ein gerollter Zettel einsetzbar ist. Auf dem Zettel können Informationen wie beispielsweise der Name des Tieres oder die Adresse des Besitzers aufgenommen werden. Nachteilig an dieser Metallkapsel ist jedoch, dass nur sehr begrenzt Informationen über das Tier auf dem Zettel Platz finden. Auch gehen diese bekannten Metallkapseln häufig verloren, wenn das Tier sich im Freien beispielsweise durch Dickicht oder Unterholz bewegt. Auch kommt es häufig vor, dass Wasser in die verschraubbaren Metallkapseln eindringt, was dazu führt, dass die auf dem Papier aufgebrachten Informationen nur noch schwer gar nicht mehr lesbar sind.

Es ist daher Aufgabe der vorliegenden Erfindung, eine Halteund Führungsvorrichtung für Tiere zu schaffen, die es dem Besitzer erlaubt, eine nahezu unbegrenzte Fülle von Informationen dem Tier über dessen Halsband mitzugeben und dabei einen Datenverlust hervorgerufen durch äußere Einflüsse zu vermindern oder sogar vollständig zu verhindern.

Diese Aufgabe wird erfindungsgemäß dadurch gelöst, dass das Speichermedium derart an dem Gurtverschluss angebracht ist, dass es in eine Schließstellung des Gurtverschlusses in letzterem verliersicher und vor äußeren Einflüssen geschützt aufgenommen ist.

Dadurch, dass das Speichermedium unmittelbar in den Gurtverschluss integriert ist, wird einem Abreißen des Speichermediums von der Halte- und Führungsvorrichtung entgegengewirkt, da sich das in dem Gurtverschluss aufgenommene Speichermedium nicht mehr im Dickicht und Unterholz verfangen und als Folge von der Halte- und Führungsvorrichtung abreißen kann. Außerdem wird durch die Anordnung des Speichermediums innerhalb des Gurtverschlusses erreicht, dass das Speichermedium nicht unmittelbar äußeren Einflüssen wie beispielsweise Feuchtigkeit durch Regenwasser ausgesetzt ist.

In einem Ausführungsbeispiel der vorliegenden Erfindung weist der Gurtverschluss einen Steckabschnitt und einen Aufnahmeabschnitt auf, wobei der Steckabschnitt und der Halteabschnitt zum Verschließen der Halte- und Führungsvorrichtung ineinander bewegbar und in der Schließstellung miteinander verrastbar sind. Diese Ausbildung des Gurtverschlusses bietet eine leichte Handhabung und gleichzeitig eine einfache und sehr sichere Anbringung der Halte- und Führungsvorrichtung an das jeweilige Tier.

Um ein Eindringen von Wasser zwischen dem Steckabschnitt und dem Aufnahmeabschnitt zuverlässig entgegenzuwirken und so das Speichermedium vor einer Beschädigung durch Feuchtigkeit oder Schmutz entgegenzuwirken, weist der Gurtverschluss zwischen dem Steckabschnitt und dem Aufnahmeabschnitt in einem weiteren Ausführungsbeispiel der vorliegenden Erfindung mindestens ein Dichtelement auf.

Das Speichermedium kann an dem Steckabschnitt oder an dem Halteabschnitt, insbesondere einteilig mit dem Steckabschnitt oder dem Aufnahmeabschnitt ausgebildet sein.

In einem Ausführungsbeispiel der vorliegenden Erfindung bildet dazu das Speichermedium einen an dem Steckabschnitt ausgebildeten Führungssteg, welcher zum Verschließen der Halte- und Führungsvorrichtung in einer in dem Aufnahmeabschnitt korrespondierend ausgebildeten Aussparung einsteckbar ist. Bei dieser Ausgestaltung des Erfindungsgegenstandes bietet es sich an, das Dichtelement ebenfalls an dem Führungssteg vorzusehen, beispielsweise an den jeweiligen Endbereichen derart, dass sie im eingesteckten Zustand die Innenflächen der Aussparung des Aufnahmeabschnittes berühren.

Wenn das Speichermedium ein USB-Stick ist, wird dadurch gewährleistet, dass eine Vielzahl von Personen, die entweder das Tier oder die Halte- und Führungsvorrichtung auffinden, die auf dem Speichermedium gespeicherten Daten auf einfache Weise auslesen können, da USB-Schnittstellen eine weit verbreitete Technik darstellen.

Eine besonders einfache Verbindung zwischen Steckabschnitt und Aufnahmeabschnitt wird bereitgestellt, wenn an dem Steckabschnitt Öffnungen ausgebildet sind, in die an dem Aufnahmeabschnitt ausgebildete Rastelemente mit ihren Rastnasen zur lösbaren Verbindung von Steckabschnitt und Aufnahmeabschnitt in der Schließstellung des Gurtverschlusses einrastbar sind. Die Rastelemente können beispielsweise durch Federverriegelungselemente gebildet sein.

In einem Ausführungsbeispiel der vorliegenden Erfindung ist die Halte- und Führungsvorrichtung für Tiere als Halsband insbesondere für Hunde oder Katzen ausgebildet. Natürlich ist es auch möglich, die Halte- und Führungsvorrichtung als Geschirr auszubilden. Dies bietet sich beispielsweise bei Blindenhunden oder auch bei Nagetieren wie Kaninchen an.

Das flache Gurtmaterial kann zumindest teilweise eine lichtreflektierende oder lumineszierende Oberfläche aufweisen, um so die Tiere auch im Dunkeln beispielsweise aus beleuchteten Autos leichter sehen zu können und so eine Kollision zu vermeiden.

Weitere vorteilhafte Ausgestaltungen der vorliegenden Erfindung sind in der nachfolgenden Zeichnung sowie der dazugehörigen Figurenbeschreibung zu entnehmen.

Darin zeigen:
- Figur 1: eine erfindungsgemäße Halte- und Führungsvorrichtung für Tiere in der Form eines Hundehalsbandes; und
- Figur 2: eine Halte- und Führungsvorrichtung für Tiere, in der Form eines Geschirrs.

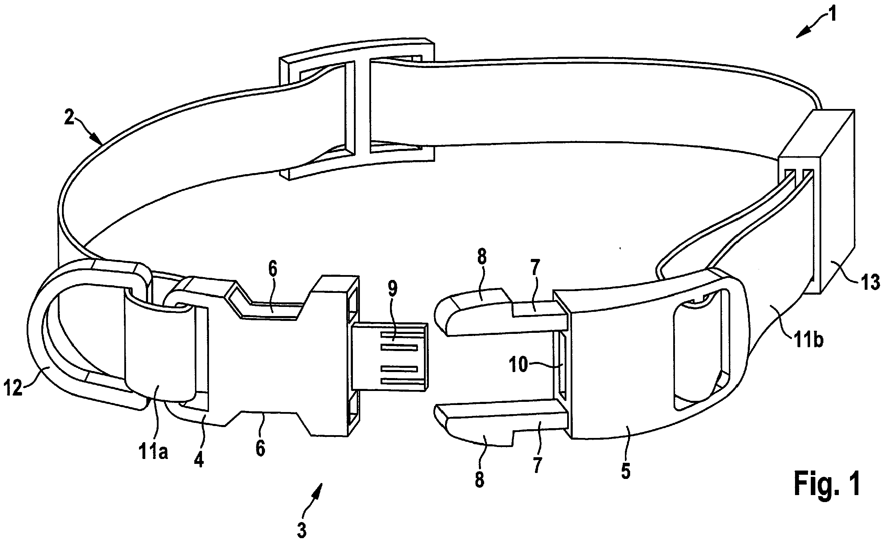

Die Figur 1 zeigt eine schematische Darstellung einer erfindungsgemäße Halte- und Führungsvorrichtung für Tiere, die als Tierhalsband ausgebildet ist. Das Tierhalsband weist einen Halsgurt 2 aus einem flachen Gurtmaterial auf, an dem ein Gurtverschluss 3 ausgebildet ist, mit dem die Halte- und Führungsvorrichtung 1 geöffnet und verschlossen werden kann.

Der Gurtverschluss 3 weist einen Steckabschnitt 4 und einen Aufnahmeabschnitt 5 auf, wobei der Steckerabschnitt 4 und der Aufnahmeabschnitt 5 zum Verschließen der Halte- und Führungsvorrichtung 1 ineinander bewegbar und in der Schließstellung miteinander verrastbar sind. Dazu sind an dem Steckabschnitt 4 Öffnungen 6 vorgesehen, in die an dem Aufnahmeabschnitt 5 ausgebildete Rastelemente 7 mit ihren Rastnasen 8 zur lösbaren Verbindung von Steckerabschnitt 4 und Aufnahmeabschnitt 5 in der Schließstellung des Gurtverschlusses 2 einrastbar sind. An dem Gurtverschluss 2 ist ein erfindungsgemäßes Speichermedium 9 derart angebracht, dass es in der Schließstellung des Gurtverschlusses 2 in letzterem verliersicher und vor äußeren Einflüssen geschützt aufgenommen ist. Dazu ist das Speichermedium 9 einteilig mit dem Steckerabschnitt 4 ausgebildet und bildet in dem vorliegenden Ausführungsbeispiel den an dem Steckerabschnitt 4 ausgebildeten Führungssteg, welcher zum Verschließen der Halte- und Führungsvorrichtung 1 in eine in dem Aufnahmeabschnitt 5 korrespondierende zu dem Führungssteg ausgebildete Aussparung 10 einsteckbar ist.

An einem umgeschlagenen Ende 11a des Halsgurtes 2 ist eine als Metallring ausgeführte Leinenbefestigungseinrichtung 12 vorgesehen. An dieser Leinenbefestigungseinrichtung 12 kann eine beliebige Leine zum Führen und Halten des Tieres befestigt werden.

Das dem mit der Leinenbefestigungseinrichtung 11 versehenen umgeschlagenen Ende 11a gegenüberliegende Ende 11b ist derart mit dem Aufnahmeabschnitt 5 verbunden, dass es eine Regulierung der Länge des Halsgurtes 2 über ein Regulierungselement 13 ermöglicht. Alternativ kann die Längenverstellung des Halsgurtes 2 über mehrere an dem Halsgurt 2 vorgesehene Druckknöpfe erfolgen.

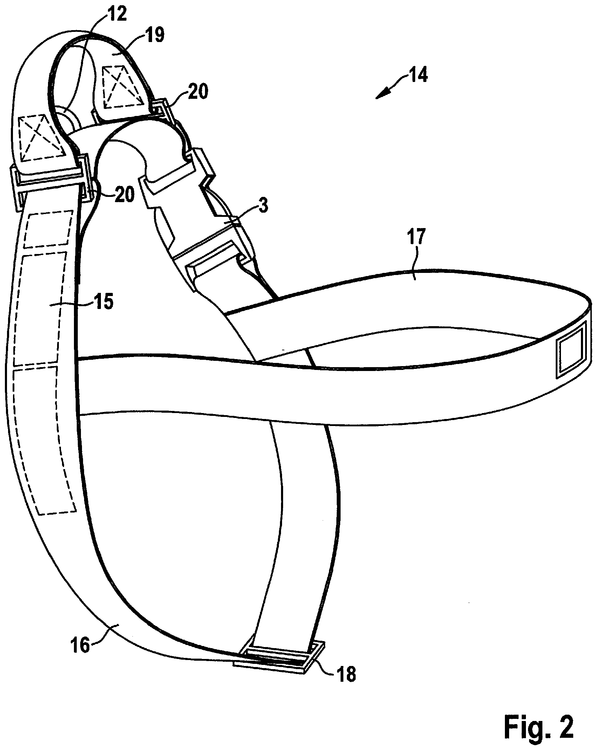

Die Figur 2 zeigt eine perspektivische Darstellung eines Hunde- oder Kaninchengeschirrs, bei dem eine Geschirranordnung 14 mit einem Schulterteil 15, einem Bauchriemen 16 sowie einem Brustriemen 17 gebildet ist. An dem Bauchriemen 16 ist ein erfindungsgemäßer Gurtverschluss 3 vorgesehen, über den die Halte- und Führungsvorrichtung 1 sicher an dem Tier befestigbar ist. Der Bauchriemen 16 weist ferner eine Verstellschnalle 18 auf, über welche der Bauchriemen 16 in seiner Länge verstellbar ist. Natürlich ist es möglich, den Gurtverschluss 3 auch an dem Brustriemen 17 vorzusehen. Der Gurtverschluss 3 ist auch hier als Steckverschluss ausgeführt, in den das Speichermedium 9 in Form eines USB-Sticks integriert ist. Ferner ist an dem Schulterteil 15 ein Griffelement 19 ausgebildet, das über zwei Befestigungsschnallen 20 mit dem Brustriemen 17 verbunden ist. Alternativ oder zusätzlich ist es auch möglich, ein Leinenbefestigungseinrichtung 12 an dem Schulterriemen 17 vorzusehen. Ferner ist an dem Brustriemen 17 und dem Bauchriemen 16 lichtreflektierendes Material vorgesehen, um ein schnelles Erkennen des Tieres auch bei Spaziergängen in der Dämmerung oder Dunkelheit beispielsweise durch Autofahrer zu gewährleisten.

## Patentansprüche

1. Halte- und Führungsvorrichtung (1) für Tiere mit mindestens einem Halsgurt (2) aus einem flachen Gurtmaterial, mindestens einem Gurtverschluss (3), mit dem die Halte- und Führungsvorrichtung (1) geöffnet und geschlossen werden kann, und mit mindestens einem Speichermedium (9) zur Speicherung von insbesondere tier- und halterspezifischen Daten, **dadurch gekennzeichnet, dass** das Speichermedium (9) derart an dem Gurtverschluss (3) angebracht ist, dass es in einer Schließstellung des Gurtverschlusses (3) in letzterem verliersicher und vor äußeren Einflüssen geschützt aufgenommen ist.

2. Halte- und Führungsvorrichtung (1) für Tiere nach Anspruch 1, **dadurch gekennzeichnet, dass** der Gurtverschluss (3) einen Steckabschnitt (4) und einen Aufnahmeabschnitt (5) aufweist, wobei der Steckabschnitt (4) und der Aufnahmeabschnitt (5) zum Verschließen der Halte- und Führungsvorrichtung (1) ineinander bewegbar und in der Schließstellung miteinander verrastbar sind.

3. Halte- und Führungsvorrichtung (1) für Tiere nach Anspruch 2, **dadurch gekennzeichnet, dass** der Gurtverschluss (3) zwischen dem Steckabschnitt (4) und dem Aufnahmeabschnitt (5) mindestens ein Dichtelement aufweist.

4. Halte- und Führungsvorrichtung (1) für Tiere nach Anspruch 2 oder 3, **dadurch gekennzeichnet, dass** das Speichermedium (9) an dem Steckabschnitt (4) oder an dem Aufnahmeabschnitt (5) insbesondere einteilig ausgebildet ist.

5. Halte- und Führungsvorrichtung für Tiere nach einem der vorhergehenden Ansprüche 2 bis 4, **dadurch gekennzeichnet, dass** das Speichermedium (9) einen an dem Steckabschnitt (4) ausgebildeten Führungssteg bildet, welcher zum Verschließen der Halte- und Führungsvorrichtung (1) in eine in dem Aufnahmeabschnitt ausgebildete Aussparung (10) einsteckbar ist.

6. Halte- und Führungsvorrichtung (1) für Tiere nach einem der vorhergehenden Ansprüche, **dadurch gekennzeichnet, dass** das Speichermedium (9) ein USB-Stick ist.

7. Halte- und Führungsvorrichtung (1) für Tiere nach einem der Ansprüche 2 bis 6, **dadurch gekennzeichnet, dass** an dem Steckabschnitt (4) Öffnungen (6) ausgebildet sind, in die an dem Aufnahmeabschnitt (5) ausgebildete Rastelemente (7) mit ihren Rastnasen (8) zur lösbaren Verbindung von Steckabschnitt (4) und Aufnahmeabschnitt (5) in der Schließstellung des Gurtverschlusses (3) einrastbar sind.

8. Halte- und Führungsvorrichtung (1) für Tiere nach Anspruch 7, **dadurch gekennzeichnet, dass** die Rastelemente (7) durch Federverriegelungselemente gebildet sind.

9. Halte- und Führungsvorrichtung (1) für Tiere nach einem der vorhergehenden Ansprüche, **dadurch gekennzeichnet, dass** sie als Halsband (2), insbesondere für Hunde oder Katzen ausgebildet ist.

10. Halte- und Führungsvorrichtung (1) für Tiere nach einem der vorhergehenden Ansprüche, **dadurch gekennzeichnet, dass** sie als Geschirr (13) ausgebildet ist.

11. Halte- und Führungsvorrichtung (1) für Tiere nach einem der vorherigen Ansprüche, **dadurch gekennzeichnet, dass** sich das flache Gurtmaterial zumindest teilweise eine lichtreflektierende oder lumineszierende Oberfläche aufweist.
